# FASCICULE DE BREVET EUROPEEN

(11) **EP 0 515 645 B1**
(45) Date de publication et mention de la délivrance du brevet: **21.05.1997**
(21) Numéro de dépôt: 92901730.9
(22) Date de dépôt: 16.12.1991
(51) Int. Cl.: C08F 10/02, C08F 4/655

(54) **PROCEDE DE PREPARATION D'UN CATALYSEUR POUR LA POLYMERISATION DES OLEFINES**
VERFAHREN ZUR HERSTELLUNG EINES KATALYSATORS FÜR OLEFINPOLYMERISATION
METHOD FOR PREPARING AN OLEFIN POLYMERIZATION CATALYST

(30) Priorité: 17.12.1990 FR 9015894
(43) Date de publication de la demande: 02.12.1992
(73) Titulaire: POLIMERI EUROPA S.r.l., 20124 Milano (IT)
(72) Inventeur: BUJADOUX, Karel, F-62300 Lens (FR); LEPREVOST, Benoît, F-59380 Bergues (FR); MORTREUX, André, F-59510 Hem (FR); PETIT, Francis, F-59650 Villeneuve d'Ascq (FR)
(74) Mandataire: Chaillot, Geneviève
(86) Numéro de dépôt international: FR9101013
(87) Numéro de publication internationale: WO9211299

(56) Documents cités:
- EP-A- 0 032 034
- DE-A- 2 257 221
- FR-A- 2 633 299

## Description

La présente invention concerne un procédé pour la préparation d'un catalyseur de type Ziegler pour l'homopolymérisation et la copolymérisation des oléfines et un procédé de polymérisation des oléfines mettant en oeuvre ledit catalyseur.

L'obtention de catalyseurs contenant au moins un dérivé de métal de transition, encore appelés "catalyseurs Ziegler-Natta", et leur utilisation pour la polymérisation des α-oléfines sont connues depuis longtemps. L'homme de l'art a sans cesse cherché à améliorer ces catalyseurs pour augmenter leur activité catalytique et/ou pour influer sur les caractéristiques des polymères obtenus.

Des travaux ont été également réalisés dans le but d'utiliser les catalyseurs Ziegler-Natta dans des conditions de température élevées permettant un temps de contact plus court entre l'oléfine à polymériser et le catalyseur de façon à augmenter la productivité des installations. Le catalyseur doit alors présenter une stabilité élevée compatible avec ces conditions drastiques de polymérisation en même temps qu'une activité et une vitesse de polymérisation initiale élevées.

L'augmentation de l'activité catalytique des catalyseurs Ziegler-Natta est un souci constant qui vise simultanément, par l'utilisation de moindres quantités de catalyseur, à diminuer le coût de fabrication du polymère et à obtenir des polymères dont la teneur en résidus catalytiques soit la plus faible possible. Ce dernier objectif a essentiellement pour but d'éviter la purification des polymères et d'obtenir, sans purification, des polymères n'ayant pas tendance à se dégrader mécaniquement et/ou thermiquement, pendant ou après transformation en produits finis.

On connaît déjà par le document US-A-3.516.978 des catalyseurs de polymérisation des oléfines préparés en faisant réagir un alliage d'aluminium et d'un métal de transition (manganèse ou vanadium), avec un dihalogénure de méthylène, en présence d'un initiateur formé de petites quantités du produit de réaction de l'aluminium et du dibromure de méthylène. Dans le catalyseur obtenu sous forme de solution, l'aluminium est sous forme du composé Cl₂AlCH₂AlCl₂, tandis que la nature du composé formé avec le métal de transition n'est pas précisée.

Il est connu par le document FR-A-2.633.298 de préparer un composant catalytique pour la polymérisation des oléfines par oxydation électrochimique au moins partielle de l'aluminium dans un solvant halogéné du type α,ω-dihalogénoalcane et, simultanément, par réduction électrochimique d'un composé de titane à la valence IV.

Il est également connu par le document FR-A-2.633.299 de préparer un catalyseur de polymérisation des oléfines par réduction d'un composé de titane à la valence IV, dans un α,ω-dihalogénoalcane, au moyen d'un composé organoaluminique halogéné puis à ajouter au mélange réactionnel un halogénure de magnésium et/ou un composé susceptible de former un halogénure de magnésium in-situ.

La demanderesse a constaté que lors de la mise en oeuvre du procédé électrochimique selon le document FR-A-2.633.298, le remplacement d'un α,ω-dihalogénoalcane donné par un homologue supérieur s'accompagne d'une vitesse de réaction plus élevée pouvant conduire à un emballement si la température est mal maîtrisée. Ce problème a pu être résolu selon l'invention qui sera décrite ci-après qui a montré qu'il est possible de préparer des catalyseurs de polymérisation en s'affranchissant de la voie électrochimique. Un second but est ainsi atteint par l'invention consistant en une simplification du procédé connu antérieurement. Et, de façon surprenante, la demanderesse a constaté que l'activité catalytique des catalyseurs obtenus est d'autant plus élevée que le nombre de carbones de la molécule d'α,ω-dihalogénoalcane est plus grand.

Un premier objet de la présente invention consiste en un procédé de préparation d'un catalyseur pour l'homopolymérisation et la copolymérisation des oléfines par réduction au moins partielle d'au moins un composé du titane à la valence IV, caractérisé en ce qu'il consiste, successivement :
- dans une première étape, à mettre en présence au moins un α,ω-dihalogénoalcane de formule générale X-(CH₂)ₙ-X¹ dans laquelle X et X¹, identiques ou différents, sont des atomes d'halogène et n est au moins égal à 2, un composé de titane à la valence IV et de l'aluminium métallique jusqu'à disparition complète de ce dernier, et
- dans une seconde étape, à ajouter à la solution obtenue un dérivé organo-magnésien en une quantité telle que le rapport molaire Mg/Ti soit au moins égal à 1.

Le composé de titane (IV) a avantageusement pour formule générale Ti(OR)ₙX₄₋ₙ dans laquelle X est un halogène, R est un radical alkyle ayant de 1 à 10 atomes de carbone et 0≤n≤4. On utilise préférentiellement le tétrachlorure de titane TiCl₄.

Les atomes d'halogène de l'α,ω-dihalogénoalcane X-(CH₂)ₙ-X¹ sont choisis parmi le fluor, le chlore, le brome et l'iode ; avantageusement, X et X¹ sont chacun un atome de chlore. La nature des atomes d'halogène et la valeur de n sont choisies de telle façon que l'α,ω-dihalogénoalcane ainsi sélectionné soit à l'état liquide et/ou dissous dans les conditions de mise en oeuvre (température, pression) du procédé. La valeur de n est choisie de préférence au moins égale à 4, avantageusement au moins égale à 6. Parmi les composés répondant à la formule générale précédente, on choisit avantageusement le dichloro-1,4-butane, de préférence le dichloro-1,6-hexane, encore avantageusement le dichloro-1,10-décane.

L'aluminium utilisé n'est pas nécessairement de très haute pureté. Il peut même s'agir d'alliages d'aluminium contenant de faibles quantités d'autres métaux, par exemple le magnésium. Avantageusement, on utilise de l'aluminium titrant au moins 98 % de pureté, de préférence au moins 99,5 %. Il est préférable, avant de le mettre en présence de l'α,ω-dihalogénoalcane et du composé de titane (IV), de décaper l'aluminium par exemple au moyen d'acide chlorhydrique. L'aluminium peut être utilisé sous toutes formes géométriques (feuilles, plaques, copeaux, grenaille) ; de préférence, on utilise de petites lamelles découpées, après décapage, dans des feuilles.

Le dérivé organomagnésien a pour formule générale R-Mg-R¹, dans laquelle R et R¹, identiques ou différents, sont choisis parmi les radicaux alkyle ayant de 1 à 12 atomes de carbone. Il est choisi par exemple parmi le n-butyléthylmagnésium, le n-butyl-s-butylmagnésium, le di-n-hexylmagnésium, et le n-butyl-n-octylmagnésium.

Les quantités de réactifs mis en présence dans le procédé selon la présente invention sont telles que :
- le rapport molaire de l'α,ω-dihalogénoalcane au titane soit compris entre 10 et 1000, avantageusement entre 20 et 500, de préférence entre 30 et 400
- le rapport molaire Al/Ti soit compris entre 0,5 et 12, de préférence entre 2 et 6,
et sont telles qu'à la fin de la première étape du procédé on obtienne la disparition complète de l'aluminium. Le rapport molaire Mg/Ti lors de la seconde étape est avantageusement compris entre 1 et 15, de préférence entre 3 et 8.

Les deux étapes du procédé selon l'invention sont mises en oeuvre à une température, pas nécessairement constante pendant toute la durée, pouvant aller jusqu'à l'ébullition du milieu réactionnel notamment dans le cas des homologues inférieurs des α,ω-dihalogénoalcanes ou dans celui où le milieu réactionnel contient un solvant, comme précisé ci-après. Cette température est comprise avantageusement entre 0 et 50°C et telle que l'α,ω-dihalogénoalcane soit à l'état liquide et/ou dissous. De préférence la température est comprise entre 20 et 40°C. On opère généralement sous pression atmosphérique en prenant les précautions habituelles pour éviter les pertes par évaporation. La durée de la première étape est variable ; la disparition de l'aluminium est atteinte, à une température donnée, et c'est là un des aspects surprenants de l'invention, en un temps d'autant plus court que la valeur de l'indice n de l'α,ω-dihalogénoalcane est plus élevée. Toutes conditions égales par ailleurs, il faut environ 16 fois moins de temps pour obtenir la disparition de l'aluminium, en présence de TiCl₄, dans le dichloro-1,6-hexane que dans le dichloro-1,2-éthane. Il convient de noter à ce propos que la présence du composé de titane (IV) est indispensable : aucune réaction n'a lieu à 40°C entre l'aluminium et le dichlorométhane ou le dichloro-1,2-éthane ; une réaction très lente se produit à partir de l'homologue n = 3.

Le procédé selon l'invention peut être mis en oeuvre en présence d'un solvant inerte convenable choisi par exemple parmi les hydrocarbures aliphatiques et/ou cycloaliphatiques saturés et/ou aromatiques dont la température d'ébullition sous pression atmosphérique n'est pas inférieure à 60°C. Il peut s'agir notamment d'un hydrocarbure aliphatique ou cycloaliphatique saturé ayant de 6 à 14 atomes de carbone, par exemple une coupe d'hydrocarbures aliphatiques saturés en C₁₀-C₁₂. La quantité de solvant inerte est choisie de telle sorte que le catalyseur obtenu soit sous forme de suspension manipulable. On peut également procéder à la dilution au moyen de ce solvant inerte de la suspension obtenue après la seconde étape du procédé selon l'invention.

Le procédé selon l'invention peut également être mis en oeuvre en présence d'au moins une α-oléfine ayant au moins 4 atomes de carbone, le cas échéant à l'état partiellement polymérisé, afin de favoriser l'activité des centres actifs du catalyseur. Comme α-oléfine, on peut utiliser avantageusement le méthyl-4-pentène-1, l'hexène-1, l'octène-1, le décène-1, en une quantité pouvant aller jusqu'à 10 fois la quantité molaire de composé de titane.

La suspension de catalyseur obtenue après la seconde étape du procédé est, généralement au moment de son utilisation, transformée en système catalytique par addition d'au moins un activateur organo-métallique choisi parmi les dérivés des éléments des groupes I à III de la Classification Périodique. La nature et la quantité de l'activateur sont choisies en fonction des performances souhaitées (activateur plus ou moins réducteur, catalyseur possédant une grande activité initiale ou bien conduisant à un polymère d'indice de fluidité spécifique, etc..). La quantité d'activateur est néanmoins généralement comprise entre 1 et 100 fois la quantité molaire de composé de métal de transition.

L'activateur est avantageusement choisi parmi les trialkylaluminiums AlR₃, les tétralkylaluminoxanes RR^{I}Al-O-AlR^{II}R^{III}, les monoalkylsilanolatodialkylaluminiums RH₂Si-O-AlR^{I}R^{II}, les dialkylsilanolatodialkylaluminiums RR^{I}HSi-O-Al-R^{II}-R^{III}, les trialkylsilanolatodialkylaluminiums RR^{I}R^{II}Si-O-AlR^{III}R^{IV} et leurs mélanges, les radicaux alkyles R, R^{I}, R^{II}, R^{III} et R^{IV}, identiques ou différents, ayant de 1 à 12 atomes de carbone. On citera par exemple le triéthylaluminium, le tri-n-butylaluminium, le tri-n-octylaluminium, le tétraisobutylaluminoxane, le méthylsilanolatodiisobutylaluminium, le diméthyléthylsilanolatodiéthylaluminium.

Un autre objet de la présente invention consiste en un procédé de polymérisation des oléfines, à une température comprise entre 20° et 350°C environ, en présence d'un catalyseur obtenu conformément au procédé de préparation décrit ci-dessus et d'au moins un activateur. Les oléfines pouvant être polymérisées selon ce procédé incluent notamment l'éthylène et les α-oléfines ayant de 3 à 6 atomes de carbone telles que le propylène, le butène-1 et le méthyl-4-pentène-1. L'éthylène peut également être copolymérisé avec des α-oléfines ayant de 3 à 12 atomes de carbone, telles que, outre celles qui viennent d'être citées, l'hexène-1, l'octène-1.

La polymérisation ou la copolymérisation peut être mise en oeuvre selon un processus continu ou discontinu, dans un réacteur autoclave ou tubulaire.

Le procédé de polymérisation peut être mis en oeuvre à une température comprise entre 20 et 250°C, sous une pression allant jusqu'à 200 bars environ, en solution ou en suspension dans un hydrocarbure inerte ayant au moins 6 atomes de carbone tel qu'une coupe d'hydrocarbures aliphatiques saturés en C₁₀-C₁₂.

Dans le cas de la (co)polymérisation de l'éthylène, il peut aussi être mis en oeuvre, de façon continue, dans un réacteur dans lequel le temps de séjour moyen du catalyseur est compris entre 1 et 150 secondes environ, la polymérisation étant effectuée à une température comprise entre 160 et 350°C environ, sous une pression comprise entre 400 et 3000 bars environ.

De façon à moduler le poids moléculaire du polymère obtenu et son indice de fluidité, on peut opérer en présence de jusqu'à 2 % en moles d'un agent de transfert de chaîne, tel que l'hydrogène. Le procédé de polymérisation selon l'invention permet l'obtention de toute une gamme de (co)polymères de l'éthylène de densité comprise entre 0,86 et 0,97, selon le rapport entre l'éthylène et le(s) comonomère(s) constituant le flux gazeux soumis à polymérisation.

Les exemples ci-après ont pour but d'illustrer l'invention de façon non limitative.

### Exemples 1 (comparatif) et 2 à 8 - Préparation des catalyseurs

Les catalyseurs ont été préparés dans un tube de Schlenk sous atmosphère d'azote. Les différents réactifs sont introduits à température ambiante dans le tube qui est ensuite porté à la température de 40°C (sauf l'exemple 7 : 20°C) au moyen d'un bain-marie.

On a ainsi introduit successivement dans le tube et selon les quantités indiquées au tableau I :
- l'α,ω-dihalogénoalcane précisé au tableau I,
- le tétrachlorure de titane TiCl₄,
- l'aluminium Al.

Après disparition complète de ce dernier, qui nécessite la durée t exprimée en heures au tableau I, on introduit progressivement du butyléthylmagnésium (BEM) en solution à 1,33 mole par litre dans l'heptane de façon à obtenir un rapport molaire Mg/Ti égal à 6, tout en maintenant la température du milieu réactionnel à 40°C.

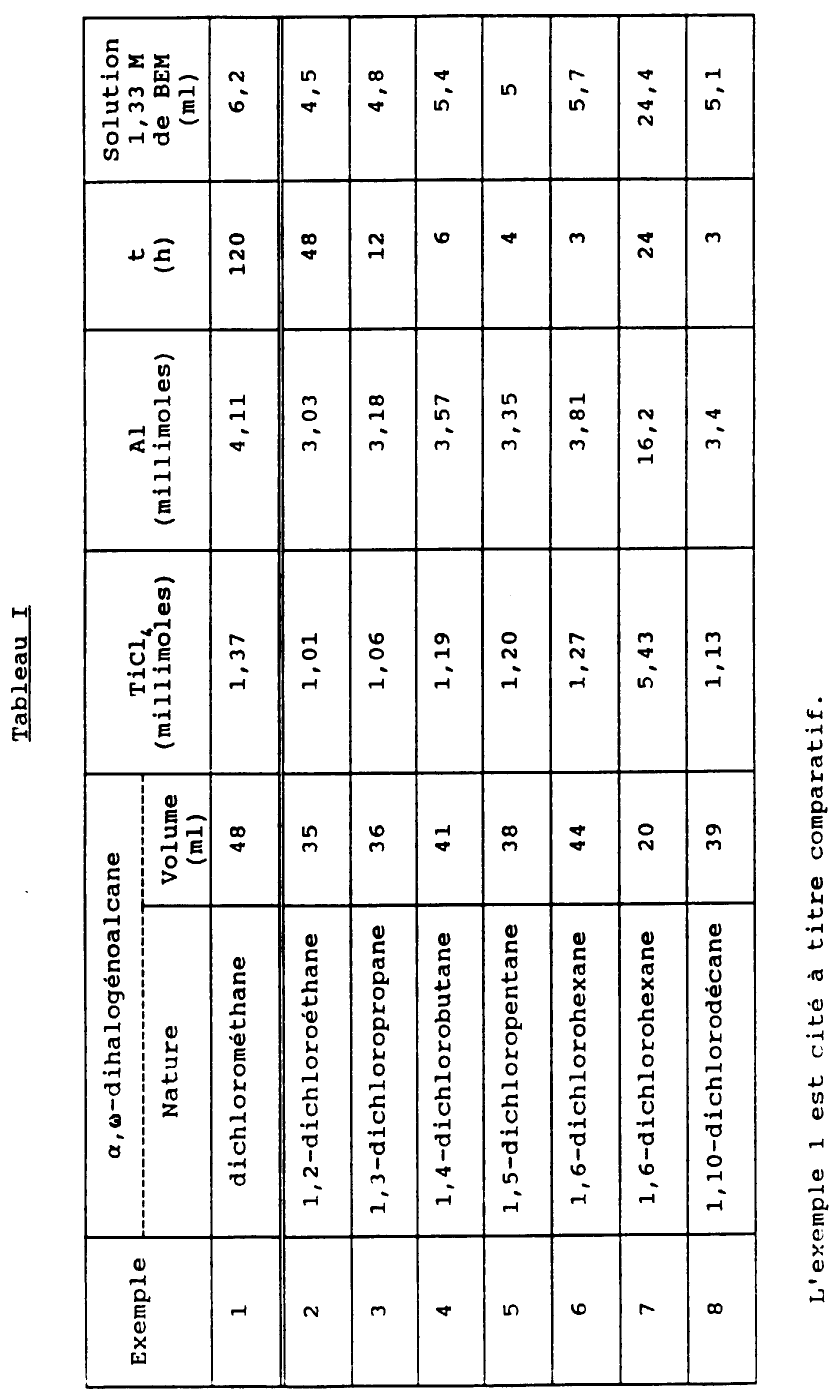

### Exemples 9 à 21 - Homopolymérisation de l'éthylène à 80°C

Dans un réacteur agité, thermostaté à 80°C au moyen d'un bain-marie, on introduit 600 ml d'une coupe d'hydrocarbures aliphatiques saturés en C₁₀-C₁₂, puis une quantité de triéthylaluminium telle que le rapport molaire Al/Ti après introduction du catalyseur soit égal à 100, on purge à l'azote, sature d'éthylène jusqu'à une pression de 1,1 bar et injecte une quantité de catalyseur contenant 0,05 millimole de titane (exemples 9 à 15) ou 0,025 millimole de titane (exemples 16 à 21). Après une heure, on introduit 20 ml d'éthanol pour arrêter la polymérisation et recueille le polyéthylène obtenu qui est alors séparé, lavé, séché et pesé. Le rendement catalytique R_{c} est exprimé en g de polyéthylène formé par millimole de titane et par heure.

Les résultats obtenus sont consignés aux Tableaux II et III.

**Tableau II**

| Exemple | 9 | 10 | 11 | 12 | 13 | 14 | 15 |
|---|---|---|---|---|---|---|---|
| Catalyseur de l'exemple | 1 | 2 | 3 | 4 | 5 | 6 | 8 |
| R_{c} | 496 | 714 | 860 | 1080 | 1164 | 1500 | 2000 |

L'exemple 9 est donné à titre comparatif.

**Tableau III**

| Exemple | 16 | 17 | 18 | 19 | 20 | 21 |
|---|---|---|---|---|---|---|
| Catalyseur de l'exemple | 1 | 2 | 3 | 4 | 5 | 6 |
| R_{c} | 184 | 1232 | 1804 | 1824 | 2348 | 2572 |

L'exemple 16 est donné à titre comparatif.

### Exemple 22 - Homopolymérisation de l'éthylène à 200°C

Dans un réacteur autoclave d'une capacité de 1 litre, muni de moyens d'agitation et de régulation de température, on introduit 600 ml d'une coupe d'hydrocarbures saturés en C₁₀-C₁₂ et purge à l'azote en élevant la température à 200°C. On introduit alors 0,05 millimole (exprimée en titane) du catalyseur puis l'activateur et l'éthylène jusqu'à une pression de 6 bars, pression maintenue pendant une minute.

Le contenu du réacteur est alors déchargé et le polymère est séparé, lavé, séché et pesé.

On a utilisé dans cet exemple le catalyseur obtenu à l'exemple 7 et, en tant qu'activateur, un mélange de triéthylaluminium (25 % en moles) et de méthylsilanolatodiisobutylaluminium (75 % en moles) en quantité telle que le rapport molaire Al (de l'activateur)/Ti (du catalyseur) soit égal à 20. On a obtenu 1440 g de polyéthylène par milliatome-gramme de titane par minute et par mole.l⁻¹ d'éthylène.

### Exemple 23

Dans les mêmes conditions qu'à l'exemple 22, on a utilisé le même activateur dans un rapport molaire Al/Ti égal à 40. On a obtenu 1875 g de polyéthylène par milliatome-gramme de titane par minute et par mole.l⁻¹ d'éthylène.

### Exemple 24 - Copolymérisation de l'éthylène avec le butène-1

L'installation de polymérisation fonctionne en régime continu et comprend un réacteur autoclave agité thermostaté, alimenté en mélange d'éthylène et de butène-1 au moyen de 2 compresseurs disposés en série, le second compresseur recevant en outre les monomères n'ayant pas réagi et provenant d'un séparateur dans lequel le produit du réacteur s'écoule en continu. Le séparateur est disposé à la suite d'une vanne de détente située à la sortie du réacteur et est maintenu sous une pression d'environ 250 bars. Le polymère recueilli au fond du séparateur est introduit, par une vanne de détente, dans une trémie d'où le polymère, séparé sous une pression d'environ 10 bars, s'écoule dans une extrudeuse. Les gaz provenant de la trémie sont recyclés vers l'entrée du premier compresseur.

Le mélange d'éthylène (65 % en moles) et de butène-1 (35 % en moles) est introduit en continu dans le réacteur dans lequel est admis également le catalyseur de l'exemple 7 à raison de 0,013 millimole de titane par kg de mélange éthylène/butène-1. Le mélange gazeux à polymériser contient en outre 0,1 % en volume d'hydrogène en tant qu'agent de transfert. Le temps de séjour moyen du catalyseur dans le réacteur est de 40 secondes. L'activateur de l'exemple 22 a été utilisé ici dans les mêmes proportions et dans le même rapport par rapport au catalyseur (rapport Al/Ti égal à 20). La température est régulée à la valeur de 240°C pendant que la pression est maintenue à 800 bars. Le copolymère recueilli après extrusion et granulation est pesé. Le rendement catalytique est égal à 12 kg de copolymère par millimole de titane.

Sur le copolymère obtenu, on a déterminé :
- l'indice de fluidité IF, mesuré selon la norme ASTM D-1238 E, égal à 11g/10 min.
- la densité d, mesurée selon la norme ASTM D-1505, égale à 0,926.

## Revendications

1. Procédé de préparation d'un catalyseur pour l'homopolymérisation et la copolymérisation des oléfines, par réduction au moins partielle d'au moins un composé du titane à la valence IV, caractérisé en ce qu'il consiste successivement :
- dans une première étape à mettre en présence au moins un α,ω-dihalogénoalcane de formule générale X-(CH₂)ₙ-X¹ dans laquelle X et X¹, identiques ou différents, sont des atomes d'halogène et n est au moins égal à 2, un composé de titane à la valence IV et de l'aluminium métallique jusqu'à disparition complète de ce dernier, et
- dans une seconde étape, à ajouter à la solution obtenue un dérivé organo-magnésien en une quantité telle que le rapport molaire Mg/Ti soit au moins égal à 1.

2. Procédé selon la revendication 1, caractérisé en ce que n est au moins égal à 4, de préférence au moins égal à 6.

3. Procédé selon l'une des revendications 1 et 2, caractérisé en ce que le rapport molaire de l'α,ω-dihalogénoalcane au titane est compris entre 10 et 1000, le rapport molaire de l'aluminium au titane est compris entre 0,5 et 12 et le rapport molaire du magnésium au titane est compris entre 1 et 15.

4. Procédé selon l'une des revendications 1 à 3, caractérisé en ce que le dérivé organo-magnésien a pour formule générale R-Mg-R¹, dans laquelle R et R¹, identiques ou différents, sont des radicaux alkyle comprenant de 1 à 12 atomes de carbone.

5. Procédé selon la revendication 4, caractérisé en ce que le dérivé organo-magnésien est le n-butyléthyl-magnésium.

6. Procédé selon l'une des revendications 1 à 5, caractérisé en ce qu'il est mis en oeuvre à une température comprise entre 0 et 50°C.

7. Procédé de polymérisation des oléfines, à une température comprise entre 20 et 350°C, en présence d'un catalyseur obtenu conformément au procédé selon l'une des revendications 1 à 6, et d'au moins un activateur.

8. Procédé selon la revendication 7, caractérisé en ce que la polymérisation est effectuée à une température comprise entre 20 et 250°C, sous une pression allant jusqu'à 200 bars, en solution ou en suspension dans un hydrocarbure liquide inerte ayant au moins 6 atomes de carbone.

9. Procédé selon la revendication 7, appliqué à la (co)polymérisation de l'éthylène, mis en oeuvre de façon continue dans un réacteur dans lequel le temps de séjour moyen du catalyseur est compris entre 1 et 150 secondes, caractérisé en ce que la polymérisation est effectuée à une température comprise entre 160 et 350°C, sous une pression comprise entre 400 et 3000 bars.

## Patentansprüche

1. Verfahren zur Herstellung eines Katalysators für die Homopolymerisation und die Copolymerisation von Olefinen durch mindestens partielle Reduktion von mindestens einer IV-wertigen Titanverbindung, dadurch gekennzeichnet, dass es aufeinanderfolgend umfasst:
- in einer ersten Stufe das Zusammenbringen von mindestens einem α,ω-Dihalogenalkan der allgemeinen Formel X-(CH₂)ₙ-X¹, worin X und X¹, die jeweils gleich oder verschieden sein können, Halogenatome bedeuten und n für mindestens 2 steht, einer IV-wertigen Titanverbindung und metallischem Aluminium, bis zum vollständigen Verschwinden des letzteren, und
- in einer zweiten Stufe die Zugabe eines magnesiumorganischen Derivats zu der erhaltenen Lösung in solch einer Menge, dass das Molverhältnis Mg/Ti mindestens gleich 1 beträgt.

2. Verfahren gemäs Patentanspruch 1, dadurch gekennzeichnet, dass n mindestens gleich 4, vorzugsweise mindestens gleich 6 ist.

3. Verfahren gemäss einem der Patentansprüche 1 und 2, dadurch gekennzeichnet, dass das Molverhältnis von α,ω-Dihalogenalkan zum Titan zwischen 10 und 1000 beträgt, das Molverhältnis von Aluminium zum Titan zwischen 0,5 und 12 beträgt und das Molverhältnis von Magnesium zum Titan zwischen 1 und 15 beträgt.

4. Verfahren gemäss einem der Patentansprüche 1 bis 3, dadurch gekennzeichnet, dass das magnesiumorganische Derivat die allgemeine Formel R-Mg-R¹ besitzt, worin R und R¹, die jeweils gleich oder verschieden sein können, Alkylreste mit 1 bis 12 Kohlenstoffatomen bedeuten.

5. Verfahren gemäss Patentanspruch 4, dadurch gekennzeichnet, dass das magnesiumorganische Derivat das n-Butylethylmagnesium ist.

6. Verfahren gemäss einem der Patentansprüche 1 bis 5, dadurch gekennzeichnet, dass es bei einer Temperatur zwischen 0 und 50°C durchgeführt wird.

7. Verfahren zur Polymerisation von Olefinen bei einer Temperatur zwischen 20 und 350°C in Anwesenheit eines Katalysators, welcher entsprechend dem Verfahren gemäss einem der Patentansprüche 1 bis 6 erhalten wurde, und mindestens eines Aktivators.

8. Verfahren gemäass Patentanspruch 7, dadurch gekennzeichnet, dass die Polymerisation bei einer Temperatur zwischen 20 und 250°C unter einem Druck bis zu 200 bar in Lösung oder Suspension in einem inerten flüssigen Kohlenwasserstoff mit mindestens 6 Kohlenstoffatomen durchgeführt wird.

9. Verfahren gemäss Patentanspruch 7, angewendet auf die (Co)polymerisation von Ethylen, welche kontiniuerlich in einem Reaktor durchgeführt wird, worin die mittlere Verweilzeit des Katalysators zwischen 1 und 150 Sekunden beträgt, dadurch gekennzeichnet, dass die Polymerisation bei einer Temperatur zwischen 160 und 350°C unter einem Druck zwischen 400 und 3000 bar durchgeführt wird.

## Claims

1. Process for the preparation of a catalyst for the homopolymerisation and copolymerisation of olefins, by at least partial reduction of at least one compound of titanium of valency IV, characterised in that it consists successively:
- in a first stage, in bringing into contact at least one α,ω-dihaloalkane of general formula X-(CH₂)ₙ-X', in which X and X', which are identical or different, are halogen atoms and n is at least equal to 2, a compound of titanium of valency IV and metallic aluminium until the latter disappears completely, and
- in a second stage, in adding to the solution obtained an organomagnesium derivative in a quantity such that the molar ratio Mg/Ti is at least equal to 1.

2. Process according to Claim 1, characterised in that n is at least equal to 4, preferably at least equal to 6.

3. Process according to either of Claims 1 and 2, characterised in that the molar ratio of the α,ω-dihaloalkane to titanium is between 10 and 1000, the molar ratio of aluminium to titanium is between 0.5 and 12 and the molar ratio of magnesium to titanium is between 1 and 15.

4. Process according to one of Claims 1 to 3, characterised in that the organomagnesium derivative has the general formula R-Mg-R' in which R and R', which are identical or different, are alkyl radicals containing from 1 to 12 carbon atoms.

5. Process according to Claim 4, characterised in that the organomagnesium derivative is n-butylethylmagnesium.

6. Process according to one of Claims 1 to 5, characterised in that it is carried out at a temperature of between 0 and 50°C.

7. Process for the polymerisation of olefins at a temperature of between 20 and 350°C in the presence of a catalyst obtained in accordance with the process according to one of Claims 1 to 6 and of at least one activator.

8. Process according to Claim 7, characterised in that the polymerisation is performed at a temperature of between 20 and 250°C at a pressure ranging up to 200 bars, in solution or suspension in an inert liquid hydrocarbon containing at least 6 carbon atoms.

9. Process according to Claim 7, applied to the (co)polymerisation of ethylene, carried out continuously in a reactor in which the average residence time of the catalyst is between 1 and 150 seconds, characterised in that the polymerisation is performed at a temperature of between 160 and 350°C at a pressure of between 400 and 3000 bars.
